# EUROPÄISCHE PATENTSCHRIFT

(11) **EP 2 100 809 B1**
(45) Veröffentlichungstag und Bekanntmachung des Hinweises auf die Patenterteilung: **22.04.2015**
(21) Anmeldenummer: 09003150.1
(22) Anmeldetag: 05.03.2009
(51) Int. Cl.: B63H 5/16

(54) **Vorrichtung zur Verringerung des Antriebsleistungsbedarfes eines Schiffes**
Device for lowering the drive output requirements of a ship
Dispositif de réduction de la puissance d'entraînement nécessaire d'un bateau

(30) Priorität: 10.03.2008 DE 202008003367 U; 02.05.2008 DE 202008006069 U; 17.06.2008 EP 08010940; 26.02.2009 DE 202009002642 U
(43) Veröffentlichungstag der Anmeldung: 16.09.2009
(73) Patentinhaber: becker marine systems GmbH & Co. KG, 21079 Hamburg (DE)
(72) Erfinder: Mewis, Friedrich, 01219 Dresden (DE)
(74) Vertreter: RGTH

(56) Entgegenhaltungen:
- EP-A- 0 470 339
- DE-C1- 4 223 570
- GB-A- 2 119 732
- GB-A- 2 177 365
- JP-A- S5 726 086
- JP-A- 58 000 492
- JP-A- 58 016 981

## Beschreibung

Die Erfindung betrifft eine Vorrichtung zur Verringerung des Antriebsleistungsbedarfes eines Ein- oder Mehrschraubenschiffes, insbesondere für völlige und nichtvöllige, nicht sehr schnelle Schiffe.

Aus der DE 42 23 570 C1 ist eine Strömungsleitfläche für Verstellpropeller bekannt. Bei dieser Strömungsleitfläche ist vorgesehen, dass durch eine vorgeschaltete Ringdüse als Diffusor eine Strömungsbeeinflussung durchgeführt wird. Hierfür wird eine Verzögerung der Anströmung im Nahbereich und eine Beschleunigung der Anströmung im außenliegenden Bereich durchgeführt. Der Diffusordurchmesser ist kleiner als 65 % des Propellerdurchmessers. Eine solche Düse ist als Verzögerungsdüse bzw. als Diffusor mit nach außen gewölbter Ringdüse ausgeführt. Dieser Diffusor verzögert die Strömung in seinem Bereich, was nur durch sehr dicke Naben, wie bei Verstellpropeller, zu einer Verbesserung des Propulsionswirkungsgrades führen kann. Eine solche Düse ist daher nicht als Beschleunigungsdüse mit einer Wölbung der Ringdüse nach innen ausgeführt. Die in dieser Druckschrift vorgestellte Düse beschleunigt daher nicht die Strömung in ihrem Bereich und ist nicht für alle Propellertypen geeignet, insbesondere nicht für Festpropeller geeignet. Ein Wirkprinzip einer Vordüse, das in der Erhöhung der Propellerströmgeschwindigkeit in Gebieten sehr hohen Mitstromes besteht, wird in der DE 42 23 570 C1 nicht beschrieben.

Aus der JP 07 267189 A ist eine Propelleranordnung mit einer ringförmigen Düse und sternförmig angeordneten Flossen bekannt. Der Propellerdurchmesser entspricht etwa dem Ringdurchmesser der Düse.

In der JP 58 000492 A ist eine weitere Propelleranordnung gezeigt, mit der eine Verbesserung des Wirkungsgrades und eine Verringerung des Antriebsleistungsbedarfs möglich sein soll. Diese Anordnung umfasst ebenfalls Flossen sowie eine Struktur bestehend aus sechs wabenförmig angeordneten Elementen.

Die JP 57026086 zeigt ein Schiff mit einer Vordüse, welche vor dem Propeller angeordnet und nach vorne geneigt ist, wobei eine Anzahl an Fins vorgesehen ist, die einendseitig an der Vordüse angebracht sind.

Aufgabe der vorliegenden Erfindung ist es, eine Vorrichtung zu schaffen, die der Verringerung des Antriebsleistungsbedarfes eines Schiffes dient. Außerdem soll eine Wirkungsgradverbesserung und eine Anpassung der Flossen bzw. Tragflügel an die Anströmung erreicht werden. Außerdem soll die Propelleranströmung verbessert werden.

Gelöst wird diese Aufgabe durch eine Vorrichtung mit den Merkmalen des Anspruches 1.

Hiernach ist die erfindungsgemäße Vorrichtung in der Weise ausgebildet, dass die in einem geringen Abstand vor dem Propeller am Schiffskörper angebrachte Vorrichtung aus einer Vordüse mit innerhalb der Vordüse angeordneten Flossen bzw. Tragflügeln besteht, wobei die Vordüse um eine horizontale, quer liegende Achse, die durch den Vordüsenmittelpunkt verläuft, bevorzugterweise um bis zu 8°, oben nach vorn gekippt sein kann.

Mit einer derart ausgebildeten Vorrichtung ist es möglich, den Antriebsleistungsbedarf eines Schiffes zu verringern. Der mögliche Gewinn steigt mit zunehmendem Schubbelastungsgrad des Propellers. Die Vorrichtung eignet sich besonders für langsame, völlige Schiffe, wie Tanker, Bulker und Schlepper und auch für nicht sehr schnelle Schiffe aller Typen. Die Vorrichtung selbst ist vor dem Propeller des Schiffes fest am Schiffskörper angebracht und besteht aus den beiden Funktionselementen Vordüse und Flossen bzw. Tragflügel.

Dabei besteht das Wirkungsprinzip der Vordüse in der Erhöhung der Propelleranströmgeschwindigkeit in Gebieten sehr hohen Mitstromes und Verringerung der Propelleranströmgeschwindigkeit in Gebieten geringen Mitstromes, wobei die Düse selbst Schub erzeugt, und das der innerhalb der Vordüse angeordneten Flossen bzw. Tragflügel in der Erzeugung eines Vordralls, wobei beide Funktionselemente auf verschiedene Verlustquellen zielen, nämlich die Vordüse auf eine Verringerung der effektiven Schubbelastung und die Flossen bzw. Tragflügel auf eine Verringerung der Drallverluste im Propellerstrahl. Durch beide Effekte wird der Wirkungsgrad des Propulsionssystems erhöht.

Dadurch, dass die Vorrichtung so dicht wie möglich vor dem Propeller angebracht ist, wird eine höchstmögliche Wirkung erzielt, und zwar auch bei unterschiedlichen Ladefällen.

Hinzu kommt, dass die erfindungsgemäße Vorrichtung nicht nur für völlige Schiffe geeignet ist; sie kann bei allen nicht sehr schnellen Schiffen, etwa V ≤ 25 kn, mit gleicher Wirkung eingesetzt werden. Auch ein Einsatz für sehr große Containerschiffe ist möglich.

Ferner verbinden die Flossen bzw. Tragflügel den Schiffskörper mit der Vordüse.

Die Flossen bzw. Tragflügel sind unsymmetrisch innerhalb der Vordüse und radial zur Propellerachse angeordnet.

Weitere vorteilhafte Ausgestaltungen sind Gegenstand der Unteransprüche.

Um eine höchstmögliche Wirkung zu erzielen, ist die Vorrichtung bzw. die Vordüse mit ihrer Hinterkante nicht weiter als 0,3 mal Propellerdurchmesser vor der Propellerebene fest angebracht. Vorzugsweise ist die Vordüse um etwa 4° oben nach vorn geneigt.

Nach einer weiteren Ausgestaltung ist die Vordüse um eine senkrechte Achse, die vorzugsweise durch den Vordüsenmittelpunkt verläuft, seitlich so verdreht, dass die Vordüse auf der aufwärts schlagenden Seite des Propellers nach vorn geneigt ist.

Die Erfindung sieht ferner vor, dass die Vordüse um eine senkrechte Achse, die vorzugsweise durch den Vordüsenmittelpunkt verläuft, seitlich um bis zu 3°, bevorzugterweise um 1°, so verdreht ist, dass die Vordüse auf der aufwärts schlagenden Seite des Propellers nach vorn gedreht ist, wobei die Drehung auch 0° sein kann, jedoch nicht in die andere Richtung.

Ferner sieht die Erfindung vor, dass die Dicke des Profils der Vordüse weniger als 12 % seiner Länge beträgt. Vorteilhafterweise kann die Dicke des Profils der Vordüse 7,5 % oder 9 % seiner Länge betragen.

Eine weitere Ausgestaltung sieht vor, dass die Flossen bzw. Tragflügel in radialer Richtung einen variablen Anstellwinkel besitzen, wobei die Flossen bzw. Tragflügel so verdreht (getwistet) sind, dass die Flossen bzw. Tragflügel innen am Schiff nach oben gerichtet sind und der Anstellwinkel nach außen zur Vordüse hin abnimmt.

So ist die Vordüse rotationssymmetrisch mit nach oben verschobener bevorzugterweise oberhalb der Propellerachse liegenden Achse angeordnet, wobei der Innendurchmesser der Vordüse maximal 90 % des Propellerdurchmessers beträgt.

Bevorzugterweise sind die Flossen bzw. Tragflügel am hinteren Ende der Vordüse angeordnet, wobei die gewölbte Seite des tragflügelförmigen und auch linsenförmigen Querschnittsprofils der Flosse bzw. des Tragflügels auf der aufwärts schlagenden Seite des Propellers nach oben und auf der abwärts schlagenden Seite des Propellers nach unten gerichtet ist. Die Anordnung von vier Flossen bzw. Tragflügeln im Innenraum der Vordüse ist bevorzugt, stellt jedoch keine

Beschränkung dar, zumal auch eine geringe oder grössere Anzahl von Flossen bzw. Tragflügel vorgesehen sein kann.

In der Zeichnung sind Ausführungsbeispiele für ein Schiff mit einem über oben nach Steuerbord drehendem Propeller der erfindungsgemäßen Vorrichtung dargestellt und zwar zeigt:
- Fig. 1: in einer Seitenansicht von Steuerbord die erfindungsgemäße aus einer Vordüse mit in deren Innenraum angeordneten Flossen bzw. Tragflügeln bestehenden Vorrichtung,
- Fig. 2: die Vorrichtung in einer Ansicht von hinten, wobei die Flossen bzw. Tragflügel nicht angestellt dargestellt sind,
- Fig. 3: einen vergrößerten Querschnitt durch das Profil einer Flosse bzw. eines Tragflügels;
- Fig. 4: eine Seitenansicht der Heckkontur,
- Fig. 5: einen Spantenriss des Hinterschiffes,
- Fig. 6: die Vordüse mit in deren Innenraum angeordneten Flossen bzw. Tragflügeln gemäß Fig. 1 mit Stellungsanordnungen der Flossen,
- Fig. 7: eine Seitenansicht der Vorrichtung mit um 4° oben nach vorn gekippter Vordüse,
- Fig. 8: eine schaubildliche Ansicht der Vordüse mit innen am Schiff nach oben gerichteten und verdrehten (getwisteten) Flossen,
- Fig. 9: ein Diagramm über Leistungseinsparungen bei Anwendung der erfindungsgemäßen Vorrichtung,
- Fig. 10: ein Diagramm über den Leistungsbedarf mit und ohne der erfindungsgemäßen Vorrichtung und
- Fig. 11: ein Diagramm zu Leistungseinsparungen bei Anwendung der erfindungsgemäßen Vorrichtung bei verschiedenen Schiffstypen.

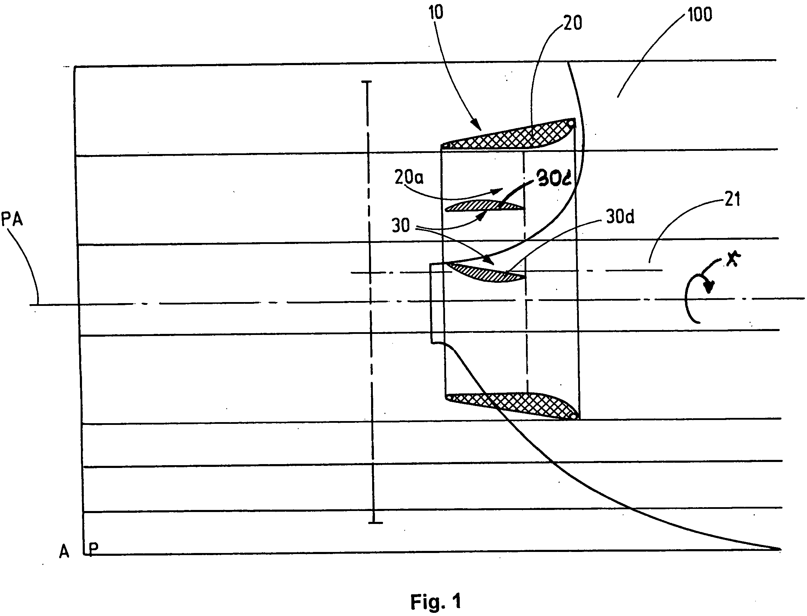

Gemäß Fig. 1 besteht die erfindungsgemäße Vorrichtung 10 darin, dass unmittelbar vor dem in der Zeichnung nicht dargestellten Propeller eines Schiffskörpers 100 eine Vordüse 20 mit zylindrischer Formgebung oder einer andersartig gestalteten Form oder Querschnittsform vorgesehen ist, die fest am Schiffskörper angebracht ist. Im Innenraum 20a der Vordüse 20 sind Flossen bzw. Tragflügel 30 angeordnet. Die Vordüse 20 ist rotationssymmetrisch mit nach oben verschobener Achse 21 am Schiffskörper angeordnet.

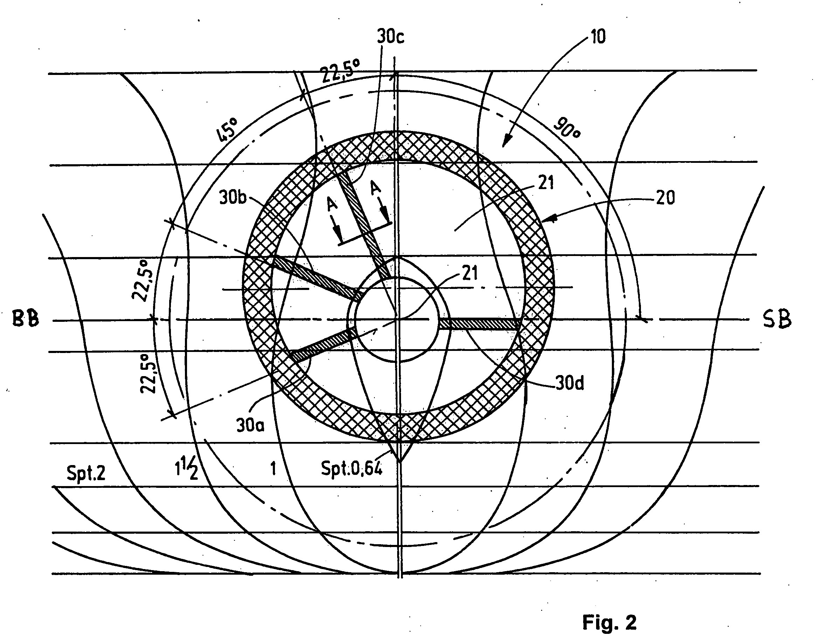

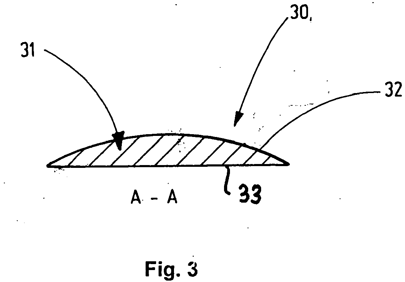

Bei dem in Fig. 2 dargestellten Ausführungsbeispiel sind im Innenraum 20a der Vordüse 20 vier Flossen bzw. Tragflügel 30a, 30b, 30c, 30d sternförmig mit unterschiedlichen Flossen- bzw. Tragflügellängen angeordnet. Diese vier Flossen bzw. Tragflügel sind unsymmetrisch innerhalb der Vordüse und radial zur Propellerachse PA angeordnet. Dabei verbinden die Flossen bzw. Tragflügel 30a, 30b, 30c, 30d die Vordüse 20 mit dem Schiffskörper 100 und sind am hinteren dem Propeller zugekehrten Ende der Vordüse 20 angeordnet, wobei die gewölbte Seite 32 des tragflügelförmigen oder linsenförmigen Querschnittsprofils 31 der Flossen bzw. Tragflügel 30, 30a, 30b, 30c, 30d auf der Backbordseite des Schiffes bzw. auf der aufwärts schlagenden Seite des Propellers nach oben und auf der Steuerbordseite des Schiffes bzw. abwärts schlagenden Seite des Propellers nach unten gerichtet ist. Die Flossen bzw. Tragflügel 30a, 30b, 30c, 30d sind des Weiteren backbordseitig vorn nach oben und steuerbordseitig vorn nach unten gerichtet (Fig. 2 und 3). Die Umlaufrichtung des Propellers erfolgt in Pfeilrichtung X (Fig. 1). Die in dem Innenraum 20a der Vordüse 20 angeordneten Flossen bzw. Tragflügel 30 bzw. 30a, 30b, 30c, 30d sind in ihren Winkelstellungen verstellbar und in den eingestellten Winkelstellungen arretierbar.

Nach einem Ausführungsbeispiel mit über oben nach Steuerbord drehendem Propeller nehmen die Flossen bzw. Tragflügel 30a, 30b, 30c, 30d folgende, bevorzugte radiale Winkelstellungen und Ausgangswinkelstellungen ein:

| | | Flossenwinkel | Anstellwinkel |
|---|---|---|---|
| Backbord (BB) | untere Flosse (30a) | 247,5° | 14° |
| Backbord (BB) | mittlere Flosse (30b) | 292,5° | 12° |
| Backbord (BB) | obere Flosse (30c) | 337,5° | 8° |
| Steuerbord (SB) | Flosse (30d) | 90,0° | 10° |

, und zwar bei einer Flossenwinkeldefinition: von hinten gesehen: 12 Uhr = 0°, im Uhrzeigersinn wachsend, wobei die Flossenwinkel und die Anstellwinkel von den angegebenen Werten abweichen können.

Nach der in Fig. 1, 3 und 6 dargestellten Ausführungsform weisen die Flossen bzw. Tragflügel ein linsenförmiges Querschnittsprofil 31 mit einer gewölbten Seitenwand 32 und mit einer geradlinig verlaufenden Grundfläche 33 auf. Die Anordnung und die Stellung beispielsweise der beiden Flossen 30 zur Propellerachse PA ist dabei derart, dass die obere Flosse mit ihrer Grundfläche 33 in etwa parallel zur Propellerachse PA verlaufend ist, wohingegen die untere Flosse eine Stellung einnimmt, bei der ihre Grundfläche 33 in einem Winkel a von mindestens 5°, bevorzugterweise von 10° zur Propellerachse PA verlaufend ist. Andere Winkelstellungen der Flossen sind möglich. Insgesamt weisen bevorzugterweise die Flossen 30a, 30b, 30c, 30d die in Fig. 2 gezeigten Stellungen auf.

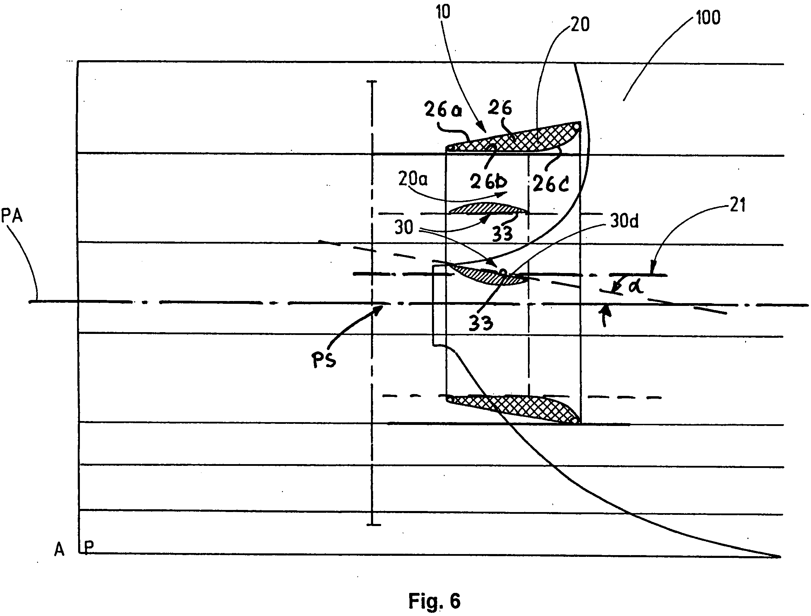

Die Vordüse 20 gemäß Fig. 1 und 6 wird gebildet von einem Formkörper 25 mit einem Querschnittsprofil 26 mit einem außenseitig liegenden, in einem Winkel zur Propellerachse PA schräg verlaufenden Wandabschnitt 26a und mit einem innenliegenden geradlinig und parallel zur Propellerachse PA verlaufenden Wandabschnitt 26b, der in dem dem Propeller abgewandten Bereich einen bogenförmigen Wandabschnitt 26c aufweist, der in den außenseitigen Wandabschnitt 26a übergeht. Der außenseitig liegende Wandabschnitt 26a kann auch bogenförmig ausgebildet sein. Die Propellerseite ist bei PS in Fig. 6 angedeutet.

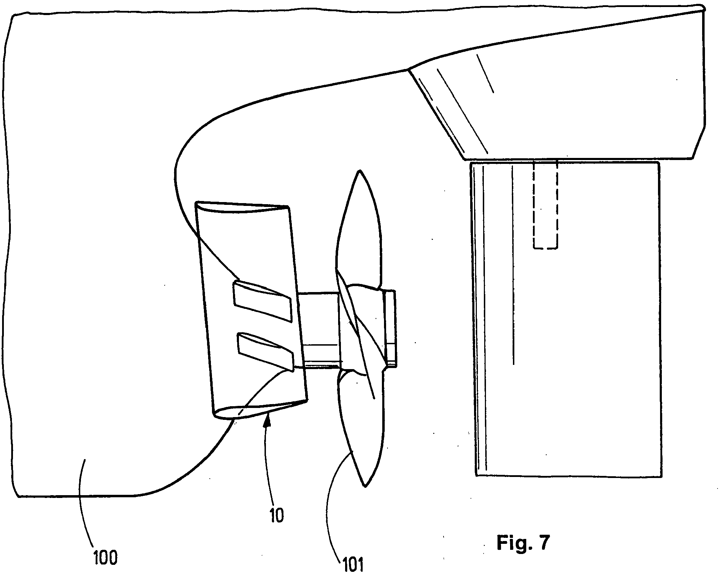

Wie Fig. 7 zeigt, ist die Vorrichtung 10 in einem geringen Abstand vor dem Propeller 101 am Schiffskörper 100 angebracht. Die Vorrichtung 10 soll dabei so dicht wie möglich vor dem Propeller 101 angeordnet sein. Die Vordüse 20 ist dabei um eine horizontale, quer liegende Achse, die vorzugsweise durch den Vordüsenmittelpunkt verläuft, bevorzugterweise um bis zu 8°, oben nach vorn verdreht, angeordnet. In der Fig. 7 ist die Vordüse 20 4° oben nach vorn gekippt. Dabei ist die Vordüse 20 mit ihrer Hinterkante nicht weiter als 0,3 mal Propellerdurchmesser vor der Propellerebene fest angebracht.

Die Vordüse 20 kann des Weiteren um eine senkrechte Achse, die vorzugsweise durch den Düsenmittelpunkt verläuft, seitlich, z. B. bis zu 3°, so gedreht werden, dass die Vordüse auf der aufwärts schlagenden Seite des Propellers 101 nach vorn gedreht wird. Optimal scheinen hierbei Drehungen bis zu 1° zu sein. Auch 0° können zutreffend sein, aber nicht in die andere Richtung.

Die Dicke des Profils der Vordüse 20 beträgt weniger als 12 % seiner Länge. Bevorzugterweise beträgt die Dicke des Profils der Vordüse 20 7,5 % oder 9 % seiner Länge.

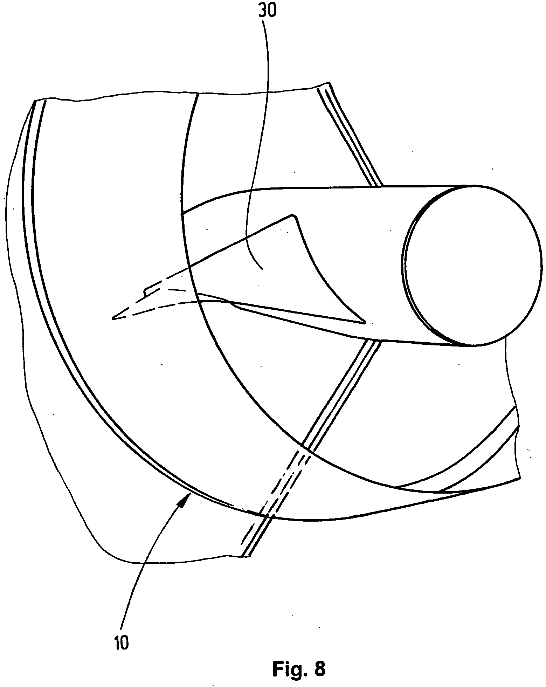

Die Flossen bzw. Tragflügel 30, 30a, 30b, 30c, 30d können in radialer Richtung einen variablen Anstellwinkel besitzen, wobei die Flossen bzw. Tragflügel so verdreht (getwistet) sind, dass die Flossen bzw. Tragflügel innen am Schiff nach oben gerichtet sind und der Anstellwinkel nach außen zur Vordüse 20 hin abnimmt (Fig. 8).

Die Dickenausgestaltung des Profils der Vordüse 20 und die Ausgestaltung, dass die Flossen bzw. Tragflügel 30, 30a, 30b, 30c, 30d in radialer Richtung einen variablen Anstellwinkel besitzen, sind für sehr völlige Schiffe unerlässlich; sie sind auch bei schnellen Schiffen anwendbar.

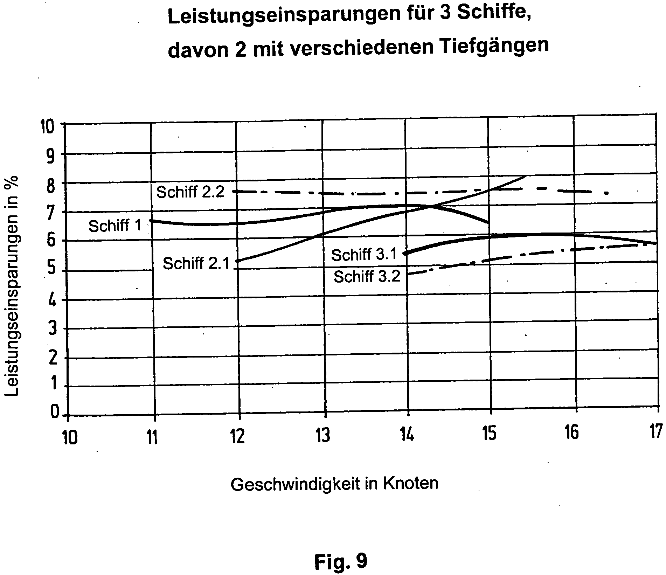

Durch die erfindungsgemäße Ausgestaltung der Vorrichtung 10 werden erhebliche Leistungseinsparungen erhalten, wie dies aus dem Diagramm der Fig. 9, das die Leistungseinsparungen durch die Anwendung der Vorrichtung 10 für drei Schiffe erreicht werden, davon bei zwei Schiffen mit verschiedenen Tiefgängen (X = Entwurfsgeschwindigkeit), ersichtlich ist.

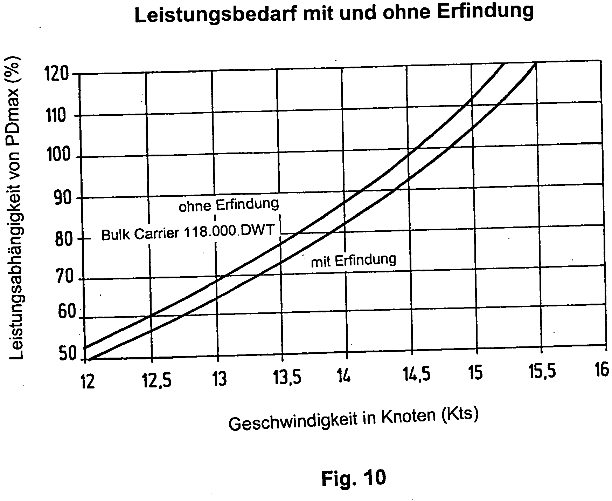

Das Diagramm gemäß Fig. 10 zeigt den Leistungsbedarf bei einem Bulk Carrier mit 118.000 DWT mit und ohne der Vorrichtung 10.

Besonders hohe Gewinne sind z. B. bei Schiffen mit 12.000 DWT auf eine dicke Nabe bei einem Verstellpropeller zurückzuführen, deren Verluste durch die Vorrichtung 10 reduziert werden.

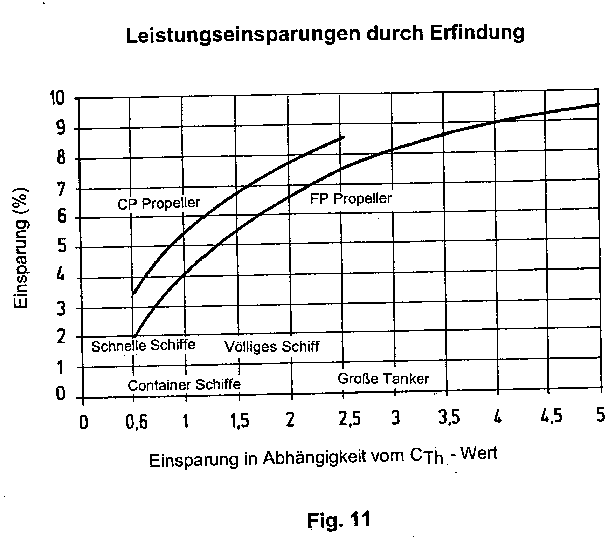

Der Schubbelastungsgrad ist besonders groß bei sehr großen langsamen Schiffen. Das Diagramm der Fig. 11 zeigt die möglichen Leistungseinsparungen durch die Vorrichtung 10 in Abhängigkeit vom C_{Th}-Wert. Im unteren Teil der Fig. 11 ist eine Zuordnung zu Schiffstypen gegeben.

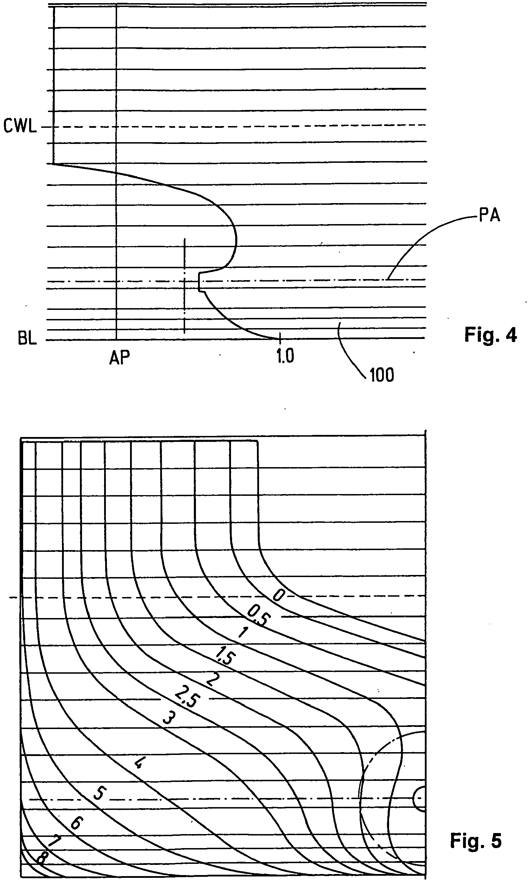

Die erfindungsgemäße Vorrichtung ist gekennzeichnet durch die in der Beschreibung und den Ansprüchen angegebenen Merkmale und durch die in den Fig. 1 bis 11 der Zeichnungen dargestellten Ausgestaltungen.

Mit der Vorrichtung 10 wurde eine neuartige, die Propulsion verbessernde Einrichtung für völlige langsame Schiffe, durch die Brennstoff eingespart wird oder Schiffe schneller fahren können, entwickelt. Die Vorrichtung besteht aus zwei kombinierten fest am Schiff angebrachten Elementen: einer Düse unmittelbar vor dem Propeller und einem darin integrierten Fin-System. Die Düse verbessert die Propellerzuströmung im Bereich ungünstigen Nachstromes und erzeugt selbst Schub; das Fin-System verringert durch Vordrallerzeugung die Verluste im Propellerstrahl und im Propellernabenwirbel, wodurch der Propellerschub bei gleicher Antriebsleistung erhöht wird. Die Wirkungen ergänzen sich.

Die erzielbaren Leistungseinsparungen durch die Vorrichtung sind wesentlich abhängig von der Propellerbelastung, sie reichen von 3 % bei kleinen Mehrzweckschiffen bis zu 9 % bei großen Tankern und Bulkern. Die Leistungseinsparungen sind nahezu unabhängig vom Tiefgang des Schiffes und von der Geschwindigkeit. Die Vorrichtung ist für Neubauten und zum Nachrüsten geeignet.

### Bezugszeichenliste

- 10: Vorrichtung
- 20: Vordüse
- 20a: Innenraum
- 21: Achse der Vordüse
- 25: Formkörper
- 26: Querschnittsprofil
- 26a: Wandabschnitt
- 26b: Wandabschnitt
- 26c: Wandabschnitt

- 30: Flosse/Tragflügel
- 30a: Flosse/Tragflügel
- 30b: Flosse/Tragflügel
- 30c: Flosse/Tragflügel
- 30d: Flosse/Tragflügel
- 31: Querschnittsprofil
- 32: gewölbte Seitenwand
- 33: Grundfläche

- 100: Schiffskörper
- 101: Propeller

- BB: Backbord
- SB: Steuerbord
- PA: Propellerachse
- PS: Propellerseite
- X: Umlaufrichtung des Propellers
- α: Winkel

## Patentansprüche

1. Ein- oder Mehrschraubenschiff, umfassend einen auf einer Propellerachse (PA) angeordneten Propeller (101) und eine Vorrichtung (10) zur Verringerung des Antriebsleistungsbedarfes des Schiffes, wobei die in einem geringen Abstand vor dem Propeller (101) am Schiffskörper (100) angebrachte Vorrichtung (10) aus einer Vordüse (20) mit innerhalb der Vordüse angeordneten Flossen bzw. Tragflügeln (30; 30a, 30b, 30c, 30d) besteht,
dass die Vordüse um eine horizontale, quer liegende Achse, die durch den Vordüsenmittelpunkt verläuft, oben nach vorn gekippt ist,
**dadurch gekennzeichnet,**
**dass** die Flossen bzw. Tragflügel (30; 30a, 30b, 30c, 30d) den Schiffskörper mit der Vordüse (20) verbinden, und
**dass** die Flossen bzw. Tragflügel (30; 30a, 30b, 30c, 30d) unsymmetrisch im Innenraum (20a) der Vordüse (20) und radial zur Propellerachse (PA) angeordnet sind.

2. Schiff nach Anspruch 1,
**dadurch gekennzeichnet,**
**dass** die Vorrichtung bzw. Vordüse (20) mit ihrer Hinterkante nicht weiter als 0,3 mal Propellerdurchmesser vor der Propellerebene fest angebracht ist.

3. Schiff nach einem der Ansprüche 1 oder 2,
**dadurch gekennzeichnet,**
**dass** die Vordüse (20) um etwa 4° oben nach vorn gekippt ist.

4. Schiff nach einem der Ansprüche 1 bis 3,
**dadurch gekennzeichnet,**
**dass** die Vordüse (20) um eine senkrechte Achse seitlich so verdreht ist, dass die Vordüse (20) auf der aufwärts schlagenden Seite des Propellers (101) nach vorn verschoben ist.

5. Schiff nach Anspruch 4,
**dadurch gekennzeichnet,**
**dass** die Vordüse (20) um eine senkrechte Achse, die vorzugsweise durch den Vordüsenmittelpunkt verläuft, seitlich um bis zu 3° so verdrehbar ist, dass die Vordüse (20) auf der aufwärts schlagenden Seite des Propellers (101) nach vorn verdreht ist.

6. Schiff nach einem der vorhergehenden Ansprüche 1 bis 5,
**dadurch gekennzeichnet,**
**dass** die Dicke des Profils der Vordüse (20) weniger als 12 % seiner Länge beträgt.

7. Schiff nach Anspruch 6,
**dadurch gekennzeichnet,**
**dass** die Dicke des Profils der Vordüse 7,5 % oder 9 % seiner Länge beträgt.

8. Schiff nach einem der vorhergehenden Ansprüche 1 bis 7,
**dadurch gekennzeichnet,**
**dass** die Flossen bzw. Tragflügel (30; 30a, 30b, 30c, 30d) in radialer Richtung einen variablen Anstellwinkel besitzen, wobei die Flossen bzw. Tragflügel so verdreht (getwistet) sind, dass die Flossen bzw. Tragflügel innen am Schiff nach oben gerichtet sind und der Anstellwinkel nach außen zur Vordüse (20) hin abnimmt.

9. Schiff nach einem der vorhergehenden Ansprüche 1 bis 8,
**dadurch gekennzeichnet,**
**dass** die Vordüse (20) mit einem Innendurchmesser, der kleiner als 90 % des Propellerdurchmessers ist, rotationssymmetrisch mit nach oben verschobener, oberhalb der Propellerachse (PA) liegender Achse (21) angeordnet ist.

10. Schiff nach einem der vorhergehenden Ansprüche 1 bis 9,
**dadurch gekennzeichnet,**
**dass** die Flossen bzw. Tragflügel am hinteren Ende der Vordüse (20) angeordnet sind, wobei die gewölbte Seite (32) des linsenförmigen Querschnittsprofils (31) der Flosse bzw. des Tragflügels (30; 30a, 30b, 30c, 30d) auf der aufwärts schlagenden Seite des Propellers nach oben und auf der abwärts schlagenden Seite des Propellers nach unten gerichtet ist.

11. Schiff nach einem der vorhergehenden Ansprüche 1 bis 10,
**dadurch gekennzeichnet,**
**dass** die Flossen bzw. Tragflügel (30; 30a, 30b, 30c, 30d) folgende bevorzugte radiale Winkelstellungen und Ausgangswinkelstellungen einnehmen:
| | | Flossenwinkel | Anstellwinkel |
|---|---|---|---|
| Backbord (BB) | untere Flosse (30a) | 247,5° | 14° |
| Backbord (BB) | mittlere Flosse (30b) | 292,5° | 12° |
| Backbord (BB) | obere Flosse (30c) | 337,5° | 8° |
| Steuerbord (SB) | Flosse (30d) | 90,0° | 10° |

12. Schiff nach einem der vorhergehenden Ansprüche 1 bis 11,
**dadurch gekennzeichnet,**
**dass** die im Innenraum (20a) der Vordüse (20) angeordneten Flossen bzw. Tragflügel (30) in ihren Winkelstellungen veränderbar bzw. verstellbar sind.

## Claims

1. A single-propeller or multi-propeller ship, comprising a propeller (101) placed on a propeller axis (PA) and a device (10) for reducing the drive power requirement of the ship, wherein the device (10) installed on the hull (100) at a short distance in front of the propeller (101) consists of a fore-nozzle (20) with fins or hydrofoils (30; 30a, 30b, 30c, 30d) placed inside the fore-nozzle,
wherein the fore-nozzle, at the top thereof, is tilted forwards relative to a horizontal transverse axis that extends through the centre of the fore-nozzle,
**characterized in**
**that** the fins or hydrofoils (30; 30a, 30b, 30c, 30d) connect the hull to the fore-nozzle (20) and
**that** the fins or hydrofoils (30; 30a, 30b, 30c, 30d) are placed asymmetrically in the inner space (20a) of the fore-nozzle (20) and radially with respect to the propeller axis (PA).

2. The ship according to claim 1,
**characterized in**
**that** the trailing edge of the device or fore-nozzle (20) is affixed no further than 0.3 times the propeller diameter upstream of the propeller plane.

3. The ship according to any one of claims 1 or 2,
**characterized in**
**that** the fore-nozzle (20), at the top, is tilted forwards by approximately 4°.

4. The ship according to any one of claims 1 to 3,
**characterized in**
**that** the fore-nozzle (20) is laterally rotated about a vertical axis such that the fore-nozzle (20) is shifted forwards on the upwards-striking side of the propeller (101).

5. The ship according to claim 4,
**characterized in**
**that** the fore-nozzle (20) is laterally rotatable by up to 3° about a vertical axis which preferably extends through the centre of the fore-nozzle, such that the fore-nozzle (20) is rotated forwards on the upwards-striking side of the propeller (101).

6. The ship according to any one of the preceding claims 1 to 5,
**characterized in**
**that** the thickness of the profile of the fore-nozzle (20) is less than 12 % of its length.

7. The ship according to claim 6,
**characterized in**
**that** the thickness of the profile of the fore-nozzle is 7.5 % or 9 % of its length.

8. The ship according to any one of the preceding claims 1 to 7,
**characterized in**
**that** the fins or hydrofoils (30; 30a, 30b, 30c, 30d) in radial direction comprise a variable angle of attack, wherein the fins or hydrofoils are twisted such that said fins or hydrofoils on the inside of the ship are oriented upwards, and the angle of attack decreases outwards towards the fore-nozzle (20).

9. The ship according to any one of the preceding claims 1 to 8,
**characterized in**
**that** the fore-nozzle (20) having an inner diameter which is less than 90 % of the propeller diameter is rotationally symmetrically placed about an axis (21) being offset above the propeller axis (PA).

10. The ship according to any one of the preceding claims 1 to 9,
**characterized in**
**that** the fins or hydrofoils are placed at the rear end of the fore-nozzle (20), wherein the vaulted side (32) of the lentiform cross-sectional profile (31) of the fin or of the hydrofoil (30; 30a, 30b, 30c, 30d) is oriented upwards on the upwards-striking side of the propeller, and is directed downwards on the downwards-striking side of the propeller.

11. The ship according to any one of the preceding claims 1 to 10,
**characterized in**
**that** the fins or hydrofoils (30; 30a, 30b, 30c, 30d) assume the following preferred radial angular positions and initial angular positions:
| | | Fin angle | Angle of attack |
|---|---|---|---|
| Port (BB) | Lower fin (30a) | 247.5° | 14° |
| Port (BB) | Middle fin (30b) | 292.5° | 12° |
| Port (BB) | Upper fin (30c) | 337.5° | 8° |
| Starboard (SB) | Fin (30d) | 90.0° | 10° |

12. The ship according to any one of the preceding claims 1 to 11,
**characterized in**
**that** the fins or hydrofoils (30) placed in the inner space (20a) of the fore-nozzle (20) are variable or adjustable with respect to their angular positions.

## Revendications

1. Navire mono-hélice ou multi-hélices comprenant une hélice (101) disposée sur un axe d'hélice (PA) et un dispositif (10) pour réduire le besoin de puissance d'entraînement du navire, sachant que le dispositif (10) disposé sur le corps du bateau (100) à une légère distance devant l'hélice (101), est composé d'une tuyère en amont (20) comprenant des ailerons, respectivement, des ailes portantes (30 ; 30a, 30b, 30c, 30d) disposé(e)s à l'intérieur de la tuyère en amont,
que la tuyère en amont est basculée vers l'avant en haut, sur un axe horizontal transversal qui passe à travers le point médian de la tuyère en amont,
**caractérisé en ce**
**que** les ailerons, respectivement, les ailes portantes (30; 30a, 30b, 30c, 30d) relient le corps du navire à la tuyère en amont (20), et
**que** les ailerons, respectivement, les ailes portantes (30; 30a, 30b, 30c, 30d) sont disposé(e)s de façon asymétrique à l'intérieur (20a) de la tuyère en amont (20) et radialement à l'axe d'hélice (PA).

2. Navire selon la revendication 1,
**caractérisé en ce**
**que** le dispositif, respectivement la tuyère en amont (20) est placée fixement devant le plan de l'hélice avec son bord arrière inférieur ou égal à 0,3 fois le diamètre de l'hélice.

3. Navire selon l'une des revendications 1 ou 2,
**caractérisé en ce**
**que** la tuyère en amont (20) est basculée d'environ 4° vers l'avant en haut.

4. Navire selon l'une des revendications précédentes 1 à 3,
**caractérisé en ce**
**que** la tuyère en amont (20) est ainsi tournée latéralement sur un axe vertical que la tuyère en amont (20) est poussée vers l'avant sur le côté d'attaque avant de l'hélice (101).

5. Navire selon la revendication 4,
**caractérisé en ce**
**que** la tuyère en amont (20) peut être ainsi tournée latéralement jusqu'à 3° sur un axe vertical qui passe de préférence à travers le points médian de la tuyère en amont, de telle sorte que la tuyère en amont (20) est tournée vers l'avant sur le côté d'attaque avant de l'hélice (101).

6. Navire selon l'une des revendications précédentes 1 à 5,
**caractérisé en ce**
**que** l'épaisseur du profilé de la tuyère en amont (20) est inférieure à 12 % de sa longueur.

7. Navire selon la revendication 6,
**caractérisé en ce**
**que** l'épaisseur du profilé de la tuyère en amont fait 7,5 % ou 9 % de sa longueur.

8. Navire selon l'une des revendications précédentes 1 à 7,
**caractérisé en ce**
**que** les ailerons, respectivement, les ailes portantes (30; 30a, 30b, 30c, 30d) possèdent un angle de réglage variable dans le sens radial, sachant que les ailerons, respectivement, les ailes portantes sont ainsi tourné(e)s (vrillé(e)s) que les ailerons, respectivement, les ailes portantes sont dirigé(e)s vers le haut à l'intérieur sur le navire et l'angle de réglage réduit vers l'extérieur en direction de la tuyère en amont (20).

9. Navire selon l'une des revendications précédentes 1 à 8,
**caractérisé en ce**
**que** la tuyère en amont (20) avec un diamètre intérieur qui est inférieur à 90% du diamètre de l'hélice, est disposée en symétrie de rotation avec l'axe (21) poussé vers le haut, reposant au-dessus de l'axe de l'hélice (PA).

10. Navire selon l'une des revendications précédentes 1 à 9,
**caractérisé en ce**
**que** les ailerons, respectivement, les ailes portantes sont disposé(e)s sur l'extrémité arrière de la tuyère en amont (20), sachant que le côté bombé (32) du profilé transversal (31) en forme de lentille de l'aileron, respectivement, de l'aile portante (30 ; 30a, 30b, 30c, 30d) est orienté vers le haut sur le côté d'attaque avant de l'hélice et vers le bas sur le côté d'attaque arrière de l'hélice.

11. Navire selon l'une des revendications précédentes 1 à 10,
**caractérisé en ce**
**que** les ailerons, respectivement, les ailes portantes (30; 30a, 30b, 30c, 30d) adoptent les positions radiales d'angle et d'angle de départ préférées suivantes :
| | | Angle d'aileron | Angle de réglage |
|---|---|---|---|
| Bâbord (BB) | Aileron inférieur (30a) | 247,5° | 14° |
| Bâbord (BB) | Aileron médian (30b) | 292,5° | 12° |
| Bâbord (BB) | Aileron supérieur (30c) | 337,5° | 8° |
| Tribord (SB) | Aileron (30d) | 90,0° | 10° |

12. Navire selon l'une des revendications précédentes 1 à 11,
**caractérisé en ce**
**que** les positions angulaires des ailerons, respectivement, des ailes portantes (30) disposé(e)s à l'intérieur (20a) de la tuyère en amont (20) sont modifiables, respectivement, réglables.
